# EUROPEAN PATENT APPLICATION

(11) **EP 4 837 881 A1**
(43) Date of publication of application: **11.11.2026**
(21) Application number: 24928095.9
(22) Date of filing: 16.10.2024
(51) Int. Cl.: C01B 25/45, H01M 4/58, H01M 4/136, H01M 10/0525

(54) **LITHIUM IRON PHOSPHATE PREPARATION METHOD, POSITIVE ELECTRODE ACTIVE MATERIAL, POSITIVE ELECTRODE PLATE, BATTERY, AND ELECTRICAL DEVICE**

(30) Priority: 06.03.2024 CN 202410256782
(71) Applicant: Contemporary Amperex Technology Co., Limited, Ningde, Fujian 352100 (CN); Chengdu Jintang Times New Materials Technology Co., Ltd, Chengdu, Sichuan 610404 (CN)
(72) Inventor: WANG, Jianqiu, Ningde, Fujian 352100 (CN); GAO, Yuzhong, Ningde, Fujian 352100 (CN); WU, Xixiong, Ningde, Fujian 352100 (CN); LI, Yu, Ningde, Fujian 352100 (CN); BIE, Changfeng, Ningde, Fujian 352100 (CN); LI, Zijun, Ningde, Fujian 352100 (CN)
(74) Representative: Ziebig Hengelhaupt Intellectual Property Attorneys Patentanwaltskanzlei PartGmbB
(86) International application number: PCT/CN2024/125142
(87) International publication number: WO 2025/185165

(57) **Abstract**

A lithium iron phosphate preparation method, a positive electrode active material, a positive electrode plate, a battery, and an electrical device. The lithium iron phosphate preparation method comprises: adding a first iron phosphate, a second iron phosphate, and a lithium source into a solvent, so as to obtain a slurry; and sintering the slurry, so as to obtain lithium iron phosphate. The specific surface area S1 of the first iron phosphate satisfies 7 m²/g ≤ S1 ≤ 9.5 m²/g, and the grain size D1 of the first iron phosphate satisfies 50nm ≤ D1 ≤ 65 nm; the specific surface area S2 of the second iron phosphate satisfies 8.5 m²/g ≤ S2 ≤ 11.5 m²/g, and the grain size D2 of the second iron phosphate satisfies 30 nm < D2 ≤ 50 nm; the specific surface area of the second iron phosphate is greater than the specific surface area of the first iron phosphate, and the grain size of the second iron phosphate is less than the grain size of the first iron phosphate. The technical solution of the present application can achieve lithium iron phosphate having high compaction density and high capacity.

## Description

### CROSS REFERENCE TO RELATED APPLICATIONS

The present application claims the priority of Chinese patent application No. 202410256782.9 filed on March 6, 2024 and entitled "LITHIUM IRON PHOSPHATE PREPARATION METHOD, POSITIVE ELECTRODE ACTIVE MATERIAL, POSITIVE ELECTRODE PLATE, BATTERY, AND ELECTRICAL APPARATUS", the entire content of which is incorporated herein by reference.

### TECHNICAL FIELD

The present application relates to the technical field of batteries, and in particular, to a lithium iron phosphate preparation method, a positive electrode active material, a positive electrode plate, a battery, and an electrical apparatus.

### BACKGROUND

In recent years, the application fields of lithium-ion batteries have become more and more extensive, for example energy storage power supply fields such as wind power, water power, thermal power generation and solar power stations, as well as electric bicycles, electric motorcycles, electric vehicles, military equipment, aerospace and the like fields. While great development of the lithium-ion batteries have been made, it has put forward higher requirements for all aspects of performance.

As a positive electrode active material, lithium iron phosphate is essential for the performance of the lithium-ion batteries. Therefore, it is an urgent technical problem to be solved how to improve the compaction density and capacity of the lithium iron phosphate.

### SUMMARY OF THE INVENTION

The present application is conducted in view of the aforementioned issues, and an objective of the present application is to provide a lithium iron phosphate preparation method, a positive electrode active material, a positive electrode plate, a battery, and an electrical apparatus, which improve the compaction density and capacity of lithium iron phosphate.

In a first aspect, a method for preparing lithium iron phosphate is provided, including: adding a first iron phosphate, a second iron phosphate and a lithium source into a solvent, so as to obtain a slurry; and performing sintering treatment on the slurry, so as to obtain lithium iron phosphate. The specific surface area S1 of the first iron phosphate satisfies: 7 m²/g ≤ S1 ≤ 9.5 m²/g, and the grain size D1 of the first iron phosphate satisfies 50 nm ≤ D1 ≤ 65 nm; and the specific surface area S2 of the second iron phosphate satisfies: 8.5 m²/g ≤ S2 ≤ 11.5 m²/g, and the grain size D2 of the second iron phosphate satisfies: 30 nm ≤ D2 ≤ 50 nm. The specific surface area of the second iron phosphate is greater than the specific surface area of the first iron phosphate, and the grain size of the second iron phosphate is less than the grain size of the first iron phosphate.

In embodiments of the present application, the first iron phosphate and the second iron phosphate have different grain sizes and specific surface areas. The specific surface area of the first iron phosphate is smaller than the specific surface area of the second iron phosphate, and the grain size of the first iron phosphate is larger than the grain size of the second iron phosphate. By coordination of the first iron phosphate and the second iron phosphate with respective specific surface areas and grain sizes, lithium iron phosphate with high compaction density and high capacity can be prepared.

In one possible embodiment, the specific surface area S1 of the first iron phosphate satisfies: 8.5 m²/g ≤ S1 ≤ 9.5 m²/g, and/or the grain size D1 of the first iron phosphate satisfies: 50 nm ≤ D1 ≤ 60 nm. By further limiting the specific surface area and grain size of the first iron phosphate, it is beneficial to obtain lithium iron phosphate with higher capacity at a lower sintering temperature.

In one possible embodiment, the specific surface area S2 of the second iron phosphate satisfies: 10 m²/g ≤ S2 ≤ 11.5 m²/g, and/or the grain size D2 of the second iron phosphate satisfies: 30 nm ≤ D2 ≤ 40 nm. By further limiting the specific surface area and grain size of the second iron phosphate, it is beneficial to obtain lithium iron phosphate with higher capacity at a lower sintering temperature.

In one possible embodiment, an iron-to-phosphorus ratio A1 of the first iron phosphate satisfies: 0.96 ≤ A1 ≤ 0.975; and/or an iron-to-phosphorus ratio A2 of the second iron phosphate satisfies: 0.96 ≤ A2 ≤ 0.975.

In the case where the iron-to-phosphorus ratio of the first iron phosphate and/or the second iron phosphate is greater than or equal to 0.96, it is beneficial for the preparation and generation of lithium iron phosphate, and can reduce the risk that there are impurity phases other than lithium iron phosphate in the prepared product; and in the case where the iron-to-phosphorus ratio of the first iron phosphate and/or the second iron phosphate is not greater than 0.975, it can reduce the risk of excessive grain growth of lithium iron phosphate caused by an excessively high iron-to-phosphorus ratio.

In one possible embodiment, the mass ratio of the first iron phosphate to the second iron phosphate is 1:1 - 9:1.

In the case where the mass ratio of the first iron phosphate to the second iron phosphate is greater than or equal to 1:1, the first iron phosphate has a suitable mass content, which is beneficial to obtain lithium iron phosphate with high compaction density; and in the case where the mass ratio of the first iron phosphate to the second iron phosphate is less than or equal to 9:1, the second iron phosphate has a suitable mass content, which is beneficial to obtain lithium iron phosphate with high capacity.

In one possible embodiment, the temperature T1 of the sintering treatment satisfies: T1 < 800°C. In this technical solution, in the case where it is smaller than 800°C, the reaction among the first iron phosphate, the second iron phosphate, the lithium source, and the carbon source can be completed, which is beneficial for energy conservation.

In one possible embodiment, the temperature T1 of the sintering treatment satisfies: 750°C ≤ T1 ≤ 790°C. By setting the temperature as described above, it is not only beneficial for the reaction among the first iron phosphate, the second iron phosphate, the lithium source, and the carbon source to generate lithium iron phosphate, but also beneficial for energy conservation.

In one possible embodiment, a total time t of the sintering treatment satisfies: 14 h ≤ t ≤ 18 h. By setting the time as described above, not only it is beneficial for sufficient conduction of the reaction, but also it can reduce the risk of abnormal grain growth of lithium iron phosphate caused by the course of the reaction time.

In one possible embodiment, the step of performing sintering treatment on the slurry includes: subjecting the slurry to grinding treatment and demagnetization treatment; subjecting the demagnetized slurry to spray-drying treatment to obtain dried powder; and subjecting the dried powder to sintering treatment, so as to obtain the lithium iron phosphate.

Subjecting the slurry to grinding treatment can enable the first iron phosphate, the second iron phosphate, the lithium source, and the carbon source in the slurry to be mixed more uniformly. Subjecting the slurry to demagnetization treatment can remove magnetism from the slurry. Subjecting the demagnetized slurry to spray-drying treatment facilitates yielding of dried powder, which facilitates conduction of a subsequent sintering treatment. Subjecting the dried powder to sintering treatment facilitates the reaction among the first iron phosphate, the second iron phosphate, the lithium source, and the carbon source, thereby generating lithium iron phosphate.

In one possible embodiment, the step of subjecting the dried powder to sintering treatment includes: in an inert atmosphere, heating the dried powder to the temperature T1 of the sintering treatment within 5 h-6 h, and then holding the dried powder at the temperature T1 of the sintering treatment for 9 h-12 h to obtain the lithium iron phosphate. The sintering treatment manner of first heating and then sintering at a constant temperature helps to reduce the occurrence of an agglomeration phenomenon in a sintered product.

In one possible embodiment, the preparation method further includes: after the dried powder is subjected to the sintering treatment, subjecting a sintered material to airflow pulverization treatment.

By subjecting the sintered material to airflow pulverization treatment, it facilitates pulverizing the sintered material into a material with smaller particles, thereby facilitating obtaining of lithium iron phosphate secondary particles of a suitable size.

In one possible embodiment, a molar ratio of an iron element content in the first iron phosphate and the second iron phosphate to a lithium element content in the lithium source is 1:1 - 1:1.05. In this way, the first iron phosphate, the second iron phosphate, and the lithium source have a suitable molar ratio, which facilitates the preparation of lithium iron phosphate through a reaction.

In one possible embodiment, the step of adding a first iron phosphate, a second iron phosphate, and a lithium source into a solvent to obtain a slurry includes: adding the first iron phosphate, the second iron phosphate, the lithium source, and a carbon source into the solvent to obtain the slurry. By adding a carbon source, it facilitates obtaining of lithium iron phosphate with a carbon cladding layer during the subsequent sintering treatment, thus giving the lithium iron phosphate better electrical conductivity performance.

In one possible embodiment, a ratio of the sum of the masses of the first iron phosphate and the second iron phosphate to the mass of the carbon source is 1:0.1 - 1:0.105. In this way, the surface of the lithium iron phosphate is cladded with a suitable mass content of carbon, thus giving the lithium iron phosphate better electrical conductivity.

In one possible embodiment, the carbon source includes at least one of sucrose, glucose, dextrin, citric acid, fructose or starch. In this way, it facilitates flexible selection of a specific type of carbon source according to actual requirements.

A second aspect of the present application provides a positive electrode active material. The positive electrode active material includes lithium iron phosphate prepared by the preparation method according to any embodiment in the first aspect of the present application.

In one possible embodiment, the compaction density of the powder of the lithium iron phosphate under 3 T is greater than or equal to 2.45 g/cm³.

In one possible embodiment, at a temperature of 25°C, the discharge capacity of the lithium iron phosphate is greater than or equal to 156 mAh/g at 0.1 C.

In the positive electrode active material of the embodiments of the present application, the positive electrode active material has a higher compaction density and a higher discharge capacity, and the positive electrode active material has excellent performance, which is beneficial to improving the performance of the battery.

In one possible embodiment, the volume average particle size Dv50 of the lithium iron phosphate satisfies: 0.8 µm ≤ Dv50 ≤ 1.8 µm. In this way, the powder of lithium iron phosphate has a suitable particle size, which facilitates the subsequent application of lithium iron phosphate.

In the embodiments of the present application, the lithium iron phosphate with a combination of large and small particle sizes prepared by the preparation method of the present application has a higher compaction density and a higher capacity, which is beneficial to improving the volumetric energy density and rate performance of the battery.

A third aspect of the present application provides a positive electrode plate, which includes a positive electrode current collector and a positive electrode film layer disposed on at least one side of the positive electrode current collector. The positive electrode film layer includes the lithium iron phosphate prepared by the preparation method according to any embodiment in the first aspect.

A fourth aspect of the present application provides a battery, including the positive electrode plate according to any embodiment in the third aspect.

A fifth aspect of the present application provides an electrical apparatus, including the battery of the fourth aspect of the present application.

### BRIEF DESCRIPTION OF THE DRAWINGS

In order to more clearly illustrate the technical solutions of the embodiments of the present application, the drawings required in the embodiments of the present application will be described briefly below. Apparently, the drawings described below depict merely some embodiments of the present application. For those of ordinary skill in the art, other drawings can also be obtained based on these drawings without any creative effort.
FIG. 1 is a schematic diagram of a method for preparing lithium iron phosphate according to an embodiment of the present application;
FIG. 2 is a schematic structural diagram of a positive electrode plate according to an embodiment of the present application;
FIG. 3 is a schematic diagram of a battery cell according to an embodiment of the present application;
FIG. 4 is a schematic structural diagram of a battery cell according to an embodiment of the present application;
FIG. 5 is a schematic diagram of a battery according to an embodiment of the present application;
FIG. 6 is a schematic structural diagram of a battery according to an embodiment of the present application;
FIG. 7 is a schematic structural diagram of an electrical apparatus according to an embodiment of the present application;
FIG. 8 is a graph of first charge and discharge at a rate of 0.1 C according to an embodiment of the present application; and
FIG. 9 is an SEM picture of lithium iron phosphate according to an embodiment of the present application.

### Reference numerals:

1-electrical apparatus;
11-case; 12-electrode assembly; 13-cover plate;
100-battery cell, 121-positive electrode plate, 122-positive electrode current collector, 123-positive electrode film layer, 400-battery, 401-upper box, 402-lower box, 500-motor, 600-controller.

### DETAILED DESCRIPTION

Hereinafter, embodiments of a method for preparing lithium iron phosphate, a positive electrode active material, a positive electrode plate, a battery, and an electrical apparatus of the present application are described in detail with reference to the drawings as appropriate, but unnecessary details have been omitted. For example, there are cases where detailed descriptions of well-known items and repeated descriptions of actually identical structures are omitted. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all steps of the present application may be performed sequentially or randomly, and optionally sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

The terms "above", "below", "greater than", or "less than" used in the present application include the number itself. For example, "at least one" refers to one or more, and "at least one of A and B" refers to "A", "B" or "A and B".

Various design factors, for example capacity, energy density, cycle life, and reliability, need to be considered for the development of the battery technology. The performance of the positive electrode active material has a great influence on the performance of the battery. Lithium iron phosphate (LiFeO₄) with an olivine-type crystalline structure has outstanding advantages such as a high discharge specific capacity, a long cycle life, a good safety performance, a low price, non-toxicity and no environmental pollution, etc., and therefore has a wide range of application scenarios. However, compared to ternary materials, lithium iron phosphate has lower compaction density and capacity, resulting in limited improvement in battery performance. In some treating manners, the compaction density of lithium iron phosphate is improved by the manner of raising the sintering temperature and extending the holding time. However, such a treating manner will cause a high risk of abnormal grain growth of the lithium iron phosphate, thereby leading to a decrease in the capacity of the lithium iron phosphate. Therefore, it is a technical problem that needs to be solved urgently how to provide a method for preparing lithium iron phosphate, so as to improve the compaction density and capacity of the lithium iron phosphate.

In view of this, the present application provides a method for preparing lithium iron phosphate. In the method for preparing lithium iron phosphate, a first iron phosphate and a second iron phosphate with particular specific surface areas and grain sizes are used in cooperation to prepare lithium iron phosphate with both high compaction density and high capacity.

The method for preparing lithium iron phosphate, the positive electrode active material, the positive electrode plate, the battery cell, the battery and the electrical apparatus of the present application are described hereafter with reference to the accompanying drawings.

### [Method for preparing lithium iron phosphate]

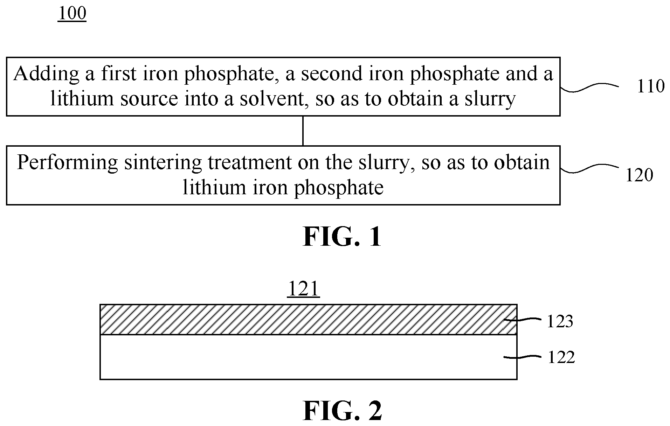

FIG. 1 is a schematic diagram of a method for preparing lithium iron phosphate according to an embodiment of the present application. For example, as shown in FIG. 1, an embodiment of the present application provides a method 100 for preparing lithium iron phosphate. The preparation method 100 includes the following steps.

Step 110. a first iron phosphate, a second iron phosphate and a lithium source are added into a solvent, so as to obtain a slurry.

The specific surface area S1 of the first iron phosphate satisfies: 7 m²/g ≤ S1 ≤ 9.5 m²/g. S1 can be 7 m²/g, 8 m²/g, 8.5 m²/g, 9 m²/g, 9.5 m²/g, or any value within the aforementioned range.

The grain size D1 of the first iron phosphate satisfies: 50 nm ≤ D1 ≤ 65 nm. D1 can be 50 nm, 60 nm, 65 nm, or any value within the aforementioned range.

The specific surface area S2 of the second iron phosphate satisfies: 8.5 m²/g ≤ S2 ≤ 11.5 m²/g. S2 can be 8.5 m²/g, 9.5 m²/g, 10 m²/g, 11 m²/g, 11.5 m²/g, or any value within the aforementioned range.

The grain size D2 of the second iron phosphate satisfies: 30 nm ≤ D2 ≤ 50 nm. D2 can be 30 nm, 40 nm, 45 nm, 50 nm, or any value within the aforementioned range. The specific surface area of the second iron phosphate is greater than the specific surface area of the first iron phosphate, and the grain size of the second iron phosphate is smaller than the grain size of the first iron phosphate.

The first iron phosphate and the second iron phosphate are single-crystal materials, and the grain size refers to the size of a single grain.

The specific surface areas of the first iron phosphate and the second iron phosphate can be specific surface areas obtained by testing with a BET specific surface area adsorption method.

There is a certain correspondence between the specific surface area and the grain size. For grains with the same size, the specific surface area varies slightly under the influence of different preparation processes. For example, for the second iron phosphate, in the case where the grain size D2 of the second iron phosphate is in the range of 30 nm - 50 nm, due to the influence of the preparation process, etc., the specific surface area of the second iron phosphate will basically not exceed 11.5 m²/g.

The specific surface area of the second iron phosphate is greater than the specific surface area of the first iron phosphate, and the second iron phosphate has higher reactivity. During the sintering process, the second iron phosphate reacts with the lithium source before the first iron phosphate. Thus, the second iron phosphate reacts with the lithium source to generate crystal nuclei, and the first iron phosphate reacts with the lithium source and crystallizes based on the crystal nuclei generated by the second iron phosphate. Furthermore, the grain size of the second iron phosphate is smaller than the grain size of the first iron phosphate. Therefore, during the sintering process, the second iron phosphate reacts with the lithium source to generate small and numerous crystals, which is beneficial for the subsequent reaction of the first iron phosphate with the lithium source to generate more uniform grains. This facilitates the generation of more uniform lithium iron phosphate grains with a suitable particle size, reduces the generation of abnormally large grains, and thus helps to obtain lithium iron phosphate with higher compaction density and higher capacity.

Selecting the first iron phosphate for sintering results in lithium iron phosphate with larger particles, which are easier to compact, thus helping to improve the compaction density of lithium iron phosphate. Selecting the second iron phosphate for sintering results in lithium iron phosphate with smaller particles, which has a suitable length of a lithium ion deintercalation path, thereby facilitating lithium ion transport and diffusion, and helping to improve the capacity of the lithium iron phosphate. The cooperation of the first iron phosphate and the second iron phosphate helps to improve the compaction density and capacity of the lithium iron phosphate.

In the case where the specific surface area S1 of the first iron phosphate is not less than 7 m²/g, the first iron phosphate has a suitable specific surface area, and thus the first iron phosphate has suitable reactivity, which is beneficial to reduce the risk of difficulty in generating the lithium iron phosphate at a certain sintering temperature due to an excessively low specific surface area of the first iron phosphate, and also beneficial to reduce the risk of abnormal grain growth of the lithium iron phosphate due to a high sintering temperature. In the case where the specific surface area S1 of the first iron phosphate is not greater than 9.5 m²/g, there is a certain difference in the specific surface areas of the first iron phosphate and the second iron phosphate, which facilitates the preferential reaction of the second iron phosphate with the lithium source.

In the case where the specific surface area S2 of the second iron phosphate is not less than 8.5 m²/g, there is a certain difference in the specific surface areas of the first iron phosphate and the second iron phosphate, which facilitates the preferential reaction of the second iron phosphate with the lithium source.

It should be noted that the "first" in the first iron phosphate and the "second" in the second iron phosphate are only used for distinguish them, indicating that the first iron phosphate and the second iron phosphate have different properties, for example different specific surface areas, grain sizes, iron-to-phosphorus ratios, etc.

Optionally, in the step 110, a carbon source may be further added into the solvent to prepare a carbon cladding layer of a certain thickness on the surface of lithium iron phosphate.

As an example, the solvent is water.
Step 120. sintering treatment is performed on the slurry, so as to obtain lithium iron phosphate.

In the step 120, sintering treatment is performed on the slurry to facilitate the reaction of the first iron phosphate, the second iron phosphate, and the lithium source in the slurry, thereby generating lithium iron phosphate.

In embodiments of the present application, the first iron phosphate and the second iron phosphate have different grain sizes and specific surface areas. The specific surface area of the first iron phosphate is smaller than the specific surface area of the second iron phosphate, and the grain size of the first iron phosphate is larger than the grain size of the second iron phosphate. By coordination of the first iron phosphate and the second iron phosphate, lithium iron phosphate with high compaction density and high capacity can be prepared.

Generally speaking, as the specific surface area of the iron phosphate increases, the compaction density and capacity of the prepared iron phosphate will be greater. However, in the case where the specific surface area of iron phosphate reaches a certain value, it becomes difficult to further improve the compaction density and capacity of the prepared iron phosphate. By adopting the cooperation of the first iron phosphate and the second iron phosphate with particular specific surface areas and grain sizes in the embodiments of the present application, the compaction density and capacity of the lithium iron phosphate can be improved, thereby obtaining the lithium iron phosphate with a compaction density greater than or equal to 2.45 g/cm³ and a discharge capacity greater than or equal to 156 mAh/g at a temperature of about 25°C and at 0.1 C.

In some embodiments, the specific surface area S1 of the first iron phosphate satisfies: 8.5 m²/g ≤ S1 ≤ 9.5 m²/g, and/or the grain size D1 of the first iron phosphate satisfies: 50 nm ≤ D1 ≤ 60 nm.

As an example, the first iron phosphate has the specific surface area S1 of 8.5 m²/g, and the grain size D1 of 50 nm.

In the aforementioned embodiments, the following three cases may be included: the specific surface area S1 of the first iron phosphate satisfies: 8.5 m²/g ≤ S1 ≤ 9.5 m²/g, and the grain size D1 is not specifically limited; the grain size D1 of the first iron phosphate satisfies: 50 nm ≤ D1 ≤ 60 nm, and the specific surface area is not specifically limited; or, the specific surface area S1 of the first iron phosphate satisfies: 8.5 m²/g ≤ S1 ≤ 9.5 m²/g, and the grain size D1 of the first iron phosphate satisfies: 50 nm ≤ D1 ≤ 60 nm.

By further limiting the specific surface area and grain size of the first iron phosphate, it is beneficial to obtain lithium iron phosphate with higher capacity at a lower sintering temperature.

In some embodiments, the specific surface area S2 of the second iron phosphate satisfies: 10 m²/g ≤ S2 ≤ 11.5 m²/g, and/or the grain size D2 of the second iron phosphate satisfies: 30 nm ≤ D1 ≤ 40 nm.

As an example, the second iron phosphate has the specific surface area S2 of 10 m²/g, and the grain size D2 of 30 nm.

By further limiting the specific surface area and grain size of the second iron phosphate, it is beneficial to obtain lithium iron phosphate with higher capacity at a lower sintering temperature.

In some embodiments, an iron-to-phosphorus ratio A1 of the first iron phosphate satisfies: 0.96 ≤ A1 ≤ 0.975; and/or an iron-to-phosphorus ratio A2 of the second iron phosphate satisfies: 0.96 ≤ A2 ≤ 0.975.

As some examples, A1 and/or A2 can also be any value between 0.963-0.973, for example, 0.963, 0.97, 0.973 or any value within the aforementioned range.

The iron-to-phosphorus ratio refers to the molar ratio of the iron element to the phosphorus element in iron phosphate. According to the national standard HG/T 4701-2021, the iron-to-phosphorus ratio M can be calculated according to the following formula: M = (w1/w2) × 0.5545, wherein w1 is the mass content of Fe, and w2 is the mass content of P.

The iron-to-phosphorus ratios of the first iron phosphate and the second iron phosphate can be the same or different, as long as the iron-to-phosphorus ratios of the first iron phosphate and the second iron phosphate meet the aforementioned range.

In the case where A1 or A2 is not less than 0.96, it is beneficial for the preparation and generation of lithium iron phosphate, and can reduce the risk that there are impurity phases other than lithium iron phosphate in the prepared product; and in the case where A1 or A2 is not greater than 0.975, it can reduce the risk of excessive grain growth of lithium iron phosphate caused by an excessively high iron-to-phosphorus ratio.

In this embodiment, by setting the iron-to-phosphorus ratio of the first iron phosphate and/or the iron-to-phosphorus ratio of the second iron phosphate to meet the aforementioned range, the phosphorus element has a suitable mass ratio, which is beneficial to obtain lithium iron phosphate with a suitable grain size, reduce the risk of generating impurity phases, and thus lithium iron phosphate with high capacity and compaction density can be obtained.

In some embodiments, the mass ratio of the first iron phosphate to the second iron phosphate is 1:1 - 9:1.

The mass ratio of the first iron phosphate to the second iron phosphate can be 1:1, 6:4, 2:1, 7:3, 3:1, 4:1, 5:1, 6:1, 7:1, 8:1, 9:1, or any value within the aforementioned range.

The mass ratio of the first iron phosphate to the second iron phosphate refers to the ratio of the masses of the first iron phosphate to the second iron phosphate added during the preparation of lithium iron phosphate.

In the case where the mass ratio of the first iron phosphate to the second iron phosphate is greater than or equal to 1:1, the first iron phosphate has a suitable mass content, which is beneficial to obtain lithium iron phosphate with high compaction density; and in the case where the mass ratio of the first iron phosphate to the second iron phosphate is less than or equal to 9:1, the second iron phosphate has a suitable mass content, which is beneficial to obtain lithium iron phosphate with high capacity.

In some embodiments, the mass ratio of the first iron phosphate to the second iron phosphate is 1:1 - 7:3. In this way, it is beneficial for obtaining lithium iron phosphate with high compaction density.

In some embodiments, the temperature T1 of the sintering treatment satisfies: T1 < 800°C. In this technical solution, in the case where it is smaller than 800°C, the reaction among the first iron phosphate, the second iron phosphate, and the lithium source can be completed, which is beneficial for energy conservation.

In some embodiments, the temperature T1 of the sintering treatment satisfies: 750°C ≤ T1 ≤ 790°C. T1 can be 750°C, 760°C, 780°C, 790°C, or any value within the aforementioned range.

In the case where the temperature T1 is greater than or equal to 750°C, the first iron phosphate, the second iron phosphate, and the lithium source can react to form lithium iron phosphate; and in the case where T1 is less than or equal to 790°C, it is beneficial to react at a lower temperature and save energy.

By setting 750°C ≤ T1 ≤ 790°C, it is not only beneficial for the reaction among the first iron phosphate, the second iron phosphate, and the lithium source to generate lithium iron phosphate, but also beneficial for energy conservation.

In some embodiments, a total time t of the sintering treatment satisfies: 14 h ≤ t ≤ 18 h.

The total time t of the sintering treatment can be 14 h, 15 h, 16 h, 18 h, or any value within the aforementioned range.

By setting the time as described above, not only it is beneficial for sufficient conduction of the reaction, but also it can reduce the risk of abnormal grain growth of lithium iron phosphate caused by the course of the reaction time.

In some embodiments, the step of performing sintering treatment on the slurry includes: subjecting the slurry to grinding treatment and demagnetization treatment; subjecting the demagnetized slurry to spray-drying treatment to obtain dried powder; and subjecting the dried powder to sintering treatment, so as to obtain the lithium iron phosphate.

Subjecting the slurry to grinding treatment can enable the first iron phosphate, the second iron phosphate, and the lithium source, and the carbon source in the slurry to be mixed more uniformly, which facilitates the subsequent reaction among the first iron phosphate, the second iron phosphate, and the lithium source.

As an example, the slurry is fed into a sand mill and ground twice, first coarsely and then finely, to make the slurry more uniform.

Subjecting the slurry to demagnetization treatment can remove the magnetism in the slurry and reduce the impact of magnetism on the preparation of lithium iron phosphate.

As an example, the ground slurry is sent into an iron remover for demagnetization, so as to remove a magnetic foreign matter from the slurry.

Subjecting the demagnetized slurry to spray-drying treatment facilitates obtaining of dried powder, thereby facilitating the subsequent sintering treatment. As an example, the demagnetized slurry is placed into a spray-drying device, and the inlet and outlet temperatures of the spray-drying device are controlled to obtain dried powder. The dried powder contains the first iron phosphate, the second iron phosphate and the lithium source.

By subjecting the dried powder to sintering treatment, it facilitates reaction among the first iron phosphate, the second iron phosphate, and the lithium source to generate lithium iron phosphate. As an example, sintering treatment is performed in an inert atmosphere. For example, the inert atmosphere is nitrogen.

In some embodiments, after the grinding treatment, the volume average particle size Dv50 of the slurry satisfies: 400 nm ≤ Dv50 ≤ 600 nm.

The volume average particle size of the slurry can refer to the volume average particle size of particles such as the first iron phosphate, the second iron phosphate, the lithium source, and the carbon source, etc. in the slurry.

The volume average particle size Dv50 of the slurry can be 400 nm, 500 nm, 600 nm, or any value within the aforementioned range.

In this embodiment, the first iron phosphate, the second iron phosphate, the lithium source, and the carbon source in the slurry are distributed more evenly, resulting in better slurry uniformity and making it easier to obtain dried powder with a suitable particle size during the spray-drying treatment.

In some embodiments, the volume average particle size Dv50 of the dried powder satisfies: 10 µm ≤ Dv50 ≤ 20 µm.

The volume average particle size Dv50 of the dried powder can be 10 µm, 15 µm, 20 µm, or any value within the aforementioned range.

By setting the volume average particle size of the dried powder to meet the aforementioned range, it facilitates the reaction among the first iron phosphate, the second iron phosphate, and the lithium source, thereby facilitating the preparation of lithium iron phosphate.

In some embodiments, the inlet temperature T2 of the spray-drying treatment satisfies: 190°C ≤ T2 ≤ 200°C, and the outlet temperature T3 of the spray-drying treatment satisfies: 80°C ≤ T3 ≤ 90°C.

The inlet temperature refers to the temperature of the slurry inlet of a spray-drying device. The outlet temperature refers to the temperature at the outlet of the dried powder from the spray-drying device.

T2 can be 190°C, 195°C, 200°C or any value within the aforementioned range, and T3 can be 80°C, 85°C, 90°C or any value within the aforementioned range.

By setting the inlet and outlet temperatures of the drying treatment to meet the aforementioned ranges, it facilitates obtaining of dried powder with a suitable particle size.

In some embodiments, the step of subjecting the dried powder to sintering treatment includes: in an inert atmosphere, heating the dried powder to the temperature T1 of the sintering treatment within 5 h-6 h, and then holding the dried powder at the temperature T1 of the sintering treatment for 9 h-12 h to obtain the lithium iron phosphate.

The sintering treatment manner of first heating and then sintering at a constant temperature helps to reduce the occurrence of an agglomeration phenomenon in a sintered product.

In some embodiments, the dried powder can also be placed directly in a sintering device at a temperature T1 for subjecting the dried powder to sintering treatment.

In some embodiments, the preparation method further includes: after the dried powder is subjected to sintering treatment, the sintered material is subjected to airflow pulverization treatment, wherein the volume average particle size Dv50 of lithium iron phosphate after the airflow pulverization treatment satisfies: 0.8 µm ≤ Dv50 ≤ 1.8 µm.

The volume average particle size Dv50 of the powder of lithium iron phosphate after the airflow pulverization treatment can be 0.8 µm, 1 µm, 1.5 µm, 1.8 µm, or any value within the aforementioned range.

By subjecting the sintered material to airflow pulverization treatment, it facilitates pulverizing the sintered material into a material with smaller particles, thereby facilitating obtaining of lithium iron phosphate powder of a suitable size.

As an example, after the airflow pulverization treatment, sieving and demagnetization are then conducted to obtain lithium iron phosphate as the final product.

In some embodiments, the solid content B of the slurry satisfies: 40% ≤ B ≤ 50%. This facilitates uniform mixing of the slurry.

The solid content B of the slurry can be 40%, 45%, 50%, or any value within the aforementioned range.

In some embodiments, a molar ratio of an iron element content in the first iron phosphate and the second iron phosphate to a lithium element content in the lithium source is 1:1 - 1:1.05. In this way, the first iron phosphate, the second iron phosphate, and the lithium source have a suitable molar ratio, which facilitates the preparation of lithium iron phosphate through a reaction.

In some embodiments, the step of adding a first iron phosphate, a second iron phosphate, and a lithium source into a solvent to obtain a slurry includes: adding the first iron phosphate, the second iron phosphate, the lithium source, and a carbon source into the solvent to obtain the slurry.

By adding a carbon source, it facilitates obtaining of lithium iron phosphate with a carbon cladding layer during the subsequent sintering treatment, thus giving the lithium iron phosphate better electrical conductivity performance.

In some embodiments, a ratio of the sum of the masses of the first iron phosphate and the second iron phosphate to the mass of the carbon source is 1:0.1 - 1:0.105.

The ratio of the sum of the masses of the first iron phosphate and the second iron phosphate to the mass of the carbon source can be 1:0.1, 1:0.101, 1:0.105, or any value within the aforementioned range.

By setting the ratio of the sum of the masses of the first iron phosphate and the second iron phosphate to the mass of the carbon source to meet the aforementioned range, not only it is possible to prepare lithium iron phosphate with a suitable mass content of carbon cladded on its surface, thus giving the lithium iron phosphate good conductivity; but also it is beneficial to reduce the impact of the excessively high mass content of the carbon source on the capacity of the lithium iron phosphate.

In some embodiments, the carbon source includes at least one of sucrose, glucose, dextrin, citric acid, fructose or starch. In this way, it facilitates flexible setting of the type of carbon source according to actual requirements.

In some embodiments, the slurry further includes a dispersant, which can reduce the viscosity of the mixed slurry, thereby facilitating subsequent operations.

In some embodiments, the slurry further includes an additive, and the additive may include a compound of at least one element selected from Ti, Ga, Sr, W, Mg, Si, Y, Zr, B, Mo, or La. In the aforementioned scheme, by including the additive in the slurry, it is beneficial to obtain lithium iron phosphate doped with the aforementioned elements, and thus the lithium iron phosphate can have better performance, and the battery can have performances such as ionic conductivity and a high rate.

In some embodiments, the lithium source includes at least one of lithium dihydrogen phosphate, lithium carbonate, lithium hydroxide, lithium phosphate, lithium acetate or lithium oxalate.

### [Positive electrode active material]

An embodiment of the present application provides a positive electrode active material. The positive electrode active material includes lithium iron phosphate prepared by the method for preparing lithium iron phosphate according to any embodiment described above.

In some embodiments, the compaction density of the powder of the lithium iron phosphate under 3 T is greater than or equal to 2.45 g/cm³.

In some embodiments, at a temperature of 25°C, the discharge capacity of the lithium iron phosphate is greater than or equal to 156 mAh/g at 0.1 C.

In the aforementioned scheme, the lithium iron phosphate prepared by the preparation method of the present application can have both a higher compaction density and a higher capacity.

The compaction density of the powder of the lithium iron phosphate can be 2.45 g/cm³, 2.5 g/cm³, 2.55 g/cm³, or any value within the aforementioned range; at a temperature of 25°C, the discharge capacity of the lithium iron phosphate at 0.1 C can be 156 mAh/g, 158 mAh/g, or any value within the aforementioned range.

Unless otherwise specified, the compaction density of the present application refers to the compaction density of the powder of the lithium iron phosphate under a pressure of 3 T.

In some embodiments, the volume average particle size Dv50 of the lithium iron phosphate is 0.8 µm-1.8 µm.

Specifically, the volume average particle size Dv50 of the lithium iron phosphate can be 0.8 µm, 1 µm, 1.5 µm, 1.8 µm, or any value within the aforementioned range.

In some embodiments, the lithium iron phosphate has a carbon cladding layer.

### [Positive electrode plate]

An embodiment of the present application provides a positive electrode plate. FIG. 2 is a schematic structural diagram of a positive electrode plate according to an embodiment of the present application. As shown in FIG. 2, the positive electrode plate 121 includes a positive current collector 122 and a positive electrode film layer 123 disposed on at least one side of the positive current collector 122. The positive electrode film layer 123 includes lithium iron phosphate prepared according to the method for preparing lithium iron phosphate in any embodiment described above, or the positive electrode active material described in any embodiment described above.

Generally, a battery cell includes a positive electrode plate 121, a separator, a negative electrode plate, and an electrolyte. During the charging and discharging process of the battery, active ions are intercalated and deintercalated back and forth between the positive electrode and the negative electrode. The electrolyte plays the role of transferring ions between the positive electrode and the negative electrode. The separator is arranged between the positive electrode and the negative electrode, which mainly plays a role in preventing the short circuit between the positive and negative electrodes, and meanwhile allowing the ions to pass through.

The positive electrode plate 121 includes a positive electrode current collector 122 and a positive electrode film layer 123 disposed on at least one surface of the positive electrode current collector 122, and the positive electrode film layer 123 includes lithium iron phosphate.

As an example, the positive electrode current collector 122 has two opposite surfaces in its own thickness direction, and the positive electrode film layer 123 is disposed on either or both of the opposite surfaces of the positive electrode current collector 122.

In some embodiments, the positive electrode current collector 122 can be a metal foil or a composite current collector. For example, an aluminum foil may be adopted as the metal foil. The composite current collector may include a polymer base layer and a metal layer formed on at least one surface of the polymer base layer. The composite current collector can be formed by forming a metal material (aluminum, aluminum alloy, nickel, nickel alloy, titanium, titanium alloy, silver and silver alloy, etc.) on the polymer base layer (e.g., polypropylene (PP), polyethylene terephthalate (PET), polybutylene terephthalate (PBT), polystyrene (PS), polyethylene (PE), etc.).

In some embodiments, the positive electrode film layer 123 further includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer 123 further includes a conductive agent. As an example, the conductive agent may include at least one of superconducting carbon, acetylene black, carbon black, Ketjen black, carbon dot, carbon nanotubes, graphene, and carbon nanofibers.

In some embodiments, the positive electrode plate 121 can be prepared by: dispersing the aforementioned components for preparing the positive electrode plate, e.g., the positive-electrode active material, the conductive agent, the binder and any other components in a solvent (e.g., N-methyl pyrrolidone) to form a positive electrode slurry, and coating the positive electrode slurry on a positive electrode current collector 122, followed by oven drying, cold pressing and the like procedures, to obtain the positive electrode plate 121.

### [Negative electrode plate]

The negative electrode plate includes a negative electrode current collector and a negative electrode film layer arranged on at least one surface of the negative electrode current collector, where the negative electrode film layer includes a negative electrode active material.

As an example, the negative-electrode current collector has two opposite surfaces in its own thickness direction, and the negative-electrode film layer is arranged on either or both of the opposite surfaces of the negative-electrode current collector.

In some embodiments, the negative electrode current collector may be a metal foil or a composite current collector. For example, a copper foil can be adopted as the metal foil. The composite current collector may include a polymer base layer and a metal layer formed on at least one surface of the polymer substrate. The composite current collector can be formed by forming a metal material (copper, copper alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

In some embodiments, the negative electrode active material can be a negative electrode active material which is known in the field and used for the battery. As an example, the negative electrode active material may include at least one of the following materials: artificial graphite, natural graphite, soft carbon, hard carbon, silicon-based materials, tin-based materials, lithium titanate, and the like. The silicon-based material may be selected from at least one of the group consisting of elemental silicon, a silicon-oxygen compound, a silicon-carbon composite, a silicon-nitrogen composite, or a silicon alloy. The tin-based material may be selected from at least one of the group consisting of elemental tin, a tin-oxygen compound, and a tin alloy. However, the present application is not limited to these materials. Other traditional materials that can be used as negative electrode active materials for batteries may also be used. These negative electrode active materials may be used alone or in combination of two or more thereof.

In some embodiments, the negative electrode film layer further includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further includes a conductive agent. The conductive agent may be selected from at least one of superconducting carbon, acetylene black, carbon black, Ketjen black, carbon dot, carbon nanotubes, graphene, and carbon nanofibers.

In some embodiments, the negative electrode film layer further includes other adjuvants, for example, a thickener (e.g., sodium carboxymethylcellulose (CMC-Na)) and the like.

In some embodiments, the negative electrode plate can be prepared by: dispersing the aforementioned components for preparing the negative electrode plate, e.g., the negative-electrode active material, the conductive agent, the binder and any other components in a solvent (e.g. deionized water) to form a negative electrode slurry; and coating the negative electrode slurry on a negative-electrode current collector, followed by oven drying, cold pressing and the like procedures, to obtain the negative electrode plate.

### [Electrolyte]

The electrolyte plays the role of conducting ions between the positive electrode plate 121 and the negative electrode plate. The present application has no specific limitation on the type of the electrolyte, which can be selected according to requirements. For example, the electrolyte may be in a liquid state, a gel state or an all solid state.

In some embodiments, an electrolyte solution is adopted as the electrolyte. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, bistrifluoromethanesulfonimide lithium, lithium trifluoromethanesulfonate, lithium difluorophosphate, lithium difluorooxalate borate, lithium dioxalate borate, lithium difluoro dioxalate borate, and lithium tetrafluorooxalate phosphate.

In some embodiments, the solvent can be at least one selected from ethylene carbonate, propylene carbonate, ethyl methyl carbonate, diethyl carbonate, dimethyl carbonate, dipropyl carbonate, methylpropyl carbonate, ethylpropyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte further include an electrolyte additive. For example, the electrolyte additive may include a negative electrode film-forming additive, or a positive electrode film-forming additive, or may include an additive that capable of improving some performances of the battery, e.g., an additive for improving the overcharge performance of the battery, an additive for improving the high-temperature performance or low-temperature performance of the battery, and the like.

### [Separator]

In some embodiments, the battery cell further includes a separator. The present application has no particular limitation on the types of the separator, and any well-known separator of a porous structure with good chemical stability and mechanical stability can be selected for use.

In some embodiments, the material of the separator can be selected from at least one of a glass fiber, non-woven fabric, polyethylene, polypropylene and polyvinylidene difluoride. The separator may be a single-layer thin film or a multi-layer composite thin film, and is not particularly limited. When the separator is a multi-layer composite thin film, the material of each layer may be the same or different, and there is no particular limitation on it.

In some embodiments, the positive electrode plate 121, the negative electrode plate and the separator can be made into an electrode assembly by a winding process or a lamination process.

### [Battery cell]

An embodiment of the present application provides a battery cell, which includes the positive electrode plate in any embodiment described above.

In some embodiments, the battery cell can include an outer package. The outer package can be used for packaging the aforementioned electrode assembly and the electrolyte.

In some embodiments, the outer package of the battery cell can be a hard shell, e.g., a hard plastic shell, an aluminum shell, a steel shell, etc. The outer package of the battery cell may also be a soft package, e.g., a bag-type soft package. The material of the soft bag may be a plastic, and examples of the plastic may include polypropylene, polybutylene terephthalate, polybutylene succinate, and the like.

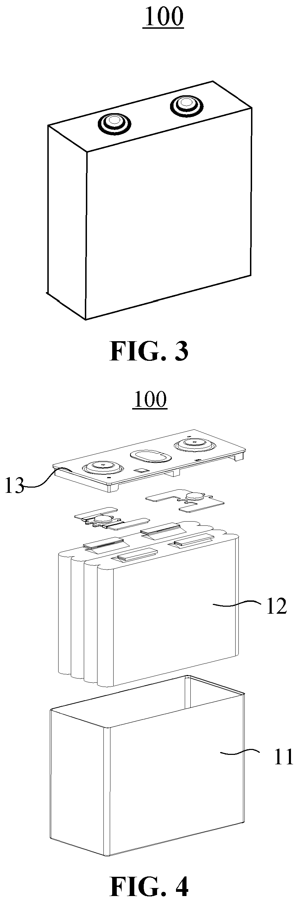

The present application has no specific limitation on the shape of the battery cell, which can be cylindrical, square or any other shape. FIG. 3 is a schematic diagram of a battery cell according to an embodiment of the present application. For example, as shown in FIG. 3, the battery cell is a square battery cell.

FIG. 4 is a schematic structural diagram of a battery cell according to an embodiment of the present application. As shown in FIG. 4, the outer package of the battery cell 100 includes a case 11 and a cover plate 13. The case 11 may include a bottom plate and a side plate connected to the bottom plate, and the bottom plate and the side plate enclose to form an accommodating cavity. The case 11 has an opening in communication with the accommodating cavity, and the cover plate 13 can cover the opening to close the accommodating cavity. The positive electrode plate 121, the negative electrode plate, and the separator may be formed into an electrode assembly 12 by a winding process or a lamination process. The electrode assembly 12 is encapsulated in the accommodating cavity. The electrode assembly 12 is soaked in the electrolyte. The number of the electrode assemblies 12 included in the battery cell 100 can be one or more, which can be selected by those skilled in the art according to specific practical requirements.

In some embodiments, the battery cell 100 can be further assembled into a battery module, and the number of the battery cells 100 included in the battery module can be one or more, and the specific number can be selected by those skilled in the art according to the application and capacity of the battery module.

### [Battery]

An embodiment of the present application provides a battery, which includes the battery cell in any embodiment described above, or the plate in any embodiment described above.

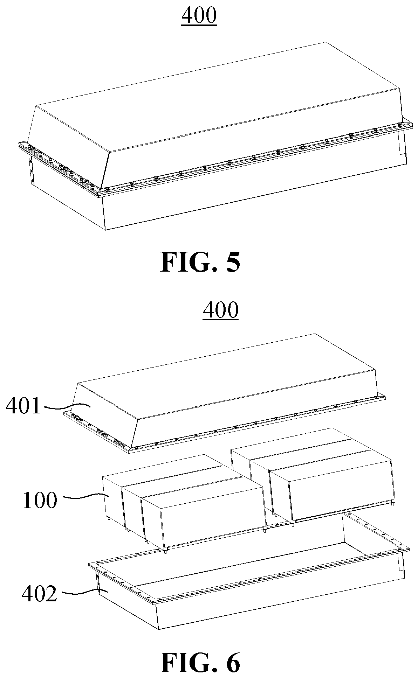

FIG. 5 is a schematic diagram of a battery according to an embodiment of the present application, and FIG. 6 is a schematic structural diagram of a battery according to an embodiment of the present application. Referring to FIGs. 5 and 6, the battery 400 may include a battery box and multiple battery cells 100 disposed in the battery box. The battery box includes an upper box 401 and a lower box 402, the upper box 401 can cover the lower box 402 to form a closed space for accommodating the battery cell 100. The multiple battery cells 100 may be arranged in the battery box in any manner.

### [Electrical apparatus]

An embodiment of the present application provides an electrical apparatus, which includes the battery in any embodiment described above.

The electrical apparatus may include at least one of the positive electrode plate 121, the battery cell 100, or the battery 400 in the embodiments of the present application. The battery cell 100 or the battery 400 can be used as a power source for the electrical apparatus, or as an energy storage unit for the electrical apparatus. The electrical apparatus may include, but is not limited to, a mobile device (e.g. a mobile phone, and a laptop, etc.), an electric vehicle (e.g. an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

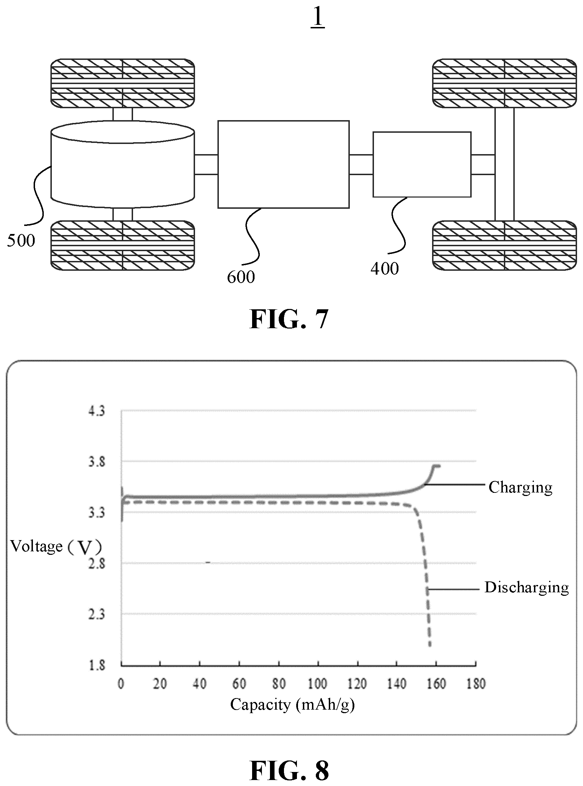

FIG. 7 is a schematic structural diagram of an electrical apparatus according to an embodiment of the present application. For example, as shown in FIG. 7, the electrical apparatus 1 is a vehicle 1. The vehicle 1 may be a fuel vehicle, a gas vehicle, or a new-energy vehicle, and the new-energy vehicle may be an all-electric vehicle, a hybrid electric vehicle, or an extended range electric vehicle, etc. The interior of the vehicle 1 may be provided with a motor 500, a controller 600, and a battery 400. The controller 600 is used for controlling the battery 400 to supply power to the motor 500. For example, the battery 400 may be disposed at the bottom or the head or tail of the vehicle 1. The battery 400 may be used for supplying power for the vehicle 1. For example, the battery 400 may serve as an operating power source of the vehicle 1, and is used for a circuitry of the vehicle 1, for example used for starting, navigation, and operation of the vehicle 1. In another embodiment of the present application, the battery 400 can not only be used as the operating power source of the vehicle 1, but also be used as a driving power source of the vehicle 1 to provide driving power for the vehicle 1 instead of or partially instead of fuel or natural gas.

The positive electrode plate 121, the battery cell 100 or the battery 400 can be selected as the electrical apparatus according to the use requirements of the electrical apparatus.

The electrical apparatus is an all-electric vehicle, a hybrid electric vehicle or a plug-in hybrid electric vehicle, and the like. In order to satisfy the requirements of the electrical apparatus for high capacity of the battery, the battery cell 100 or the battery 400 can be employed.

As another example, the apparatus may be a mobile phone, a tablet, a laptop, etc. Lighting and thinning of the apparatus is generally required, and thus the battery cell 100 can be employed as the power supply.

### [Examples]

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### Example 1

A method for preparing lithium iron phosphate in Example 1 was as follows:
(1) A first iron phosphate, a second iron phosphate, a lithium source, and a carbon source were mixed with water in a certain proportion, stirred sufficiently and homogenized to obtain a slurry with a solid content B of 45%. A mass ratio of the first iron phosphate and the second iron phosphate was 1:1, a molar ratio of the iron element in the first iron phosphate and the second iron phosphate to the lithium element in the lithium source was 1:1.05. A ratio of the sum of masses of the first iron phosphate and the second iron phosphate to the mass of the carbon source was 1:0.105. The specific surface area S1 of the first iron phosphate was 8.5 m²/g, the grain size D1 was 60 nm, the iron-to-phosphorus ratio in the first iron phosphate was 0.964, the specific surface area S2 of the second iron phosphate was 10 m²/g, the grain size D2 was 40 nm, and the iron-to-phosphorus ratio of the second iron phosphate was 0.967. The lithium source was lithium carbonate, and the carbon source was glucose and polyethylene glycol (PEG) with a mass ratio of glucose to PEG of 4:1.
(2) The slurry was grouped sufficiently with the grinding particle size Dv50 being controlled to be 0.52 µm, and sent into a finished product tank after demagnetizing for 90 min.
(3) The slurry in the finished product tank was subjected to spray-drying treatment to obtain dried powder with a volume average particle size Dv50 of 12 µm.
(4) The dried powder was sent into a kiln for sintering. The sintering conditions were: under protection of nitrogen gas, the oxygen content was less than 30 ppm, the pressure in the furnace chamber of the sintering furnace was 20-30 Pa, a packing thickness was 10 cm, and a total sintering time t was 18 hours, wherein the temperature was raised to 790°C in 6 hours, then held at 790°C for 12 hours, and cooled to less than 80°C to get the sintered material after discharging from the furnace.
(5) The sintered material was pulverized, sieved and demagnetized to obtain finished lithium iron phosphate with a volume average particle size Dv50 of 1.246 µm and Dv99 of 8.207 µm. The obtained lithium iron phosphate powder had a compaction density of 2.60 g/cm³ under a pressure of 3T, and a first discharge capacity of 156.7 mAh/g at 0.1 C at a temperature of 25°C.

In Example 2-9, the method for preparing lithium iron phosphate was basically the same as that in Example 1. The differences were briefly described hereafter.

### Example 2

The difference between Example 2 and Example 1 was that the mass ratio of the first iron phosphate to the second iron phosphate was 6:4.

In step (1), a ratio of the sum of masses of the first iron phosphate and the second iron phosphate to the mass of the carbon source was 1:0.104; in step (2), the particle size Dv50 of the slurry was 0.55 µm; in step (4), the temperature was raised to 775°C in 6 hours and then held at 775°C for 12 hours; and in step (5), a finished lithium iron phosphate product with a volume average particle size Dv50 of 1.239 µm and a Dv99 of 8.222 µm was obtained. The obtained lithium iron phosphate powder had a compaction density of 2.56g/cm³ under a pressure of 3T, and a first discharge capacity of 156.6 mAh/g at 0.1 C at a temperature of 25°C.

### Example 3

The difference between Example 3 and Example 1 was that the mass ratio of the first iron phosphate to the second iron phosphate was 7:3.

In step (1), a ratio of the sum of masses of the first iron phosphate and the second iron phosphate to the mass of the carbon source was 1:0.103; in step (2), the particle size Dv50 of the slurry was 0.53 µm; in step (4), a total sintering time t was 16.5 h, the temperature was raised to 765°C in 5.5 hours and then held at 765°C for 11 hours; and in step (5), a finished lithium iron phosphate product with a volume average particle size Dv50 of 1.473 µm and a Dv99 of 8.124 µm was obtained. The obtained lithium iron phosphate powder had a compaction density of 2.53g/cm³ under a pressure of 3T, and a first discharge capacity of 157.1 mAh/g at 0.1 C at a temperature of 25°C.

### Example 4

The difference between Example 4 and Example 1 was that the mass ratio of the first iron phosphate to the second iron phosphate was 9:1.

In step (1), a ratio of the sum of masses of the first iron phosphate and the second iron phosphate to the mass of the carbon source was 1:0.1; in step (2), the particle size Dv50 of the slurry was 0.5 µm; in step (4), a total sintering time t was 14 h, the temperature was raised to 750°C in 5 hours and then held at 750°C for 9 hours; and in step (5), a finished lithium iron phosphate product with a volume average particle size Dv50 of 1.221 µm and a Dv99 of 7.096 µm was obtained. The obtained lithium iron phosphate powder had a compaction density of 2.45g/cm³ under a pressure of 3T, and a first discharge capacity of 156.8 mAh/g at 0.1 C at a temperature of 25°C.

### Example 5

The difference between Example 5 and Example 1 was that the total time t for sintering treatment was 14 h, and the temperature was raised to 765°C in 5 hours, and then held at 765°C for 9 hours.

In step (1), a ratio of the sum of masses of the first iron phosphate and the second iron phosphate to the mass of the carbon source was 1:0.1; in step (2), the particle size Dv50 of the slurry was 0.51 µm; and in step (5), a finished lithium iron phosphate product with a volume average particle size Dv50 of 1.112 µm and a Dv99 of 8.585 µm was obtained. The obtained lithium iron phosphate powder had a compaction density of 2.45g/cm³ under a pressure of 3T, and a first discharge capacity of 159.8 mAh/g at 0.1 C at a temperature of 25°C.

During the sintering process, the higher the sintering temperature, the greater the loss of the carbon source was. In Examples 1-5, in order to give the surface of lithium iron phosphate a certain carbon cladding layer, the ratio of the sum of the masses of the first iron phosphate and the second iron phosphate to the mass of the carbon source was slightly different.

### Examples 6-7

The difference between Examples 6-7 and Example 1 was that the specific surface area and grain size of the first iron phosphate, and the specific surface area and grain size of the second iron phosphate were different.

### Examples 8-9

The difference between Examples 8-9 and Example 1 was that the iron-to-phosphorus ratios of the first iron phosphate and the second iron phosphate were different.

### Examples 10-11

The difference between Examples 10-11 and Example 1 was that the specific surface area and grain size of the first iron phosphate were different.

### Examples 12-13

The difference between Examples 12-13 and Example 1 was that the specific surface area and grain size of the second iron phosphate were different.

### Comparative Example 1

In Comparative Example 1, the second iron phosphate was not added. The obtained lithium iron phosphate powder had a compaction density of 2.45 g/cm³ under a pressure of 3 T, and a first discharge capacity of 152.6 mAh/g at 0.1 C at a temperature of 25°C.

### Comparative Example 2

In Comparative Example 2, the first iron phosphate was not added. The obtained lithium iron phosphate powder had a compaction density of 2.31g/cm³ under a pressure of 3 T, and a first discharge capacity of 160.6 mAh/g at 0.1 C at a temperature of 25°C.

### Comparative Example 3

In Comparative Example 3, the first iron phosphate had a specific surface area S1 of 6.5 m²/g and a grain size D1 of 85 nm; and the second iron phosphate had a specific surface area S2 of 8 m²/g and a grain size D2 of 70 nm. The obtained lithium iron phosphate powder had a compaction density of 2.43g/cm³ under a pressure of 3 T, and a first discharge capacity of 155 mAh/g at 0.1 C at a temperature of 25°C.

### Comparative Example 4

In Comparative Example 4, the first iron phosphate had a specific surface area S1 of 7m²/g and a grain size D1 of 65 nm; and the second iron phosphate had a specific surface area S2 of 8 m²/g and a grain size D2 of 70 nm. The obtained lithium iron phosphate powder had a compaction density of 2.45 g/cm³ under a pressure of 3 T, and a first discharge capacity of 152 mAh/g at 0.1 C at a temperature of 25°C.

### Comparative Example 5

In Comparative Example 5, the first iron phosphate had a specific surface area S1 of 6.5 m²/g and a grain size D1 of 85 nm; and the second iron phosphate had a specific surface area S2 of 8.5m²/g and a grain size D2 of 50 nm. The obtained lithium iron phosphate powder had a compaction density of 2.45 g/cm³ under a pressure of 3 T, and a first discharge capacity of 154.6 mAh/g at 0.1 C at a temperature of 25°C.

**Table 1 relevant parameters of preparation methods of Examples and Comparative Examples**

| | First iron phosphate | | | Second iron phosphate | | | Mass ratio of the first iron phosphate to the second iron phosphate | Sintering treatment temperature T/°C | Total time t of sintering treatment/h |
|---|---|---|---|---|---|---|---|---|---|
| | Specific surface area S1/m²/g | Grain size D1/nm | Iron-to-phosphorus ratio A1 | Specific surface area S2/m²/g | Grain size D2/nm | Iron-to-phosphorus ratio A2 | | | |
| Example 1 | 8.5 | 60 | 0.964 | 10 | 40 | 0.967 | 1:1 | 790 | 18 |
| Example 2 | 8.5 | 60 | 0.964 | 10 | 40 | 0.967 | 6:4 | 775 | 18 |
| Example 3 | 8.5 | 60 | 0.964 | 10 | 40 | 0.967 | 7:3 | 765 | 16.5 |
| Example 4 | 8.5 | 60 | 0.964 | 10 | 40 | 0.967 | 9:1 | 750 | 14 |
| Example 5 | 8.5 | 60 | 0.964 | 10 | 40 | 0.967 | 1:1 | 765 | 14 |
| Example 6 | 7 | 65 | 0.964 | 8.5 | 50 | 0.967 | 7:3 | 768 | 16.5 |
| Example 7 | 9.5 | 50 | 0.964 | 11.5 | 30 | 0.967 | 7:3 | 762 | 16.5 |
| Example 8 | 8.5 | 60 | 0.96 | 10 | 40 | 0.96 | 7:3 | 764 | 16.5 |
| Example 9 | 8.5 | 60 | 0.975 | 10 | 40 | 0.975 | 7:3 | 766 | 16.5 |
| Example 10 | 7 | 65 | 0.964 | 10 | 40 | 0.967 | 1:1 | 790 | 18 |
| Example 11 | 9.5 | 50 | 0.964 | 10 | 40 | 0.967 | 1:1 | 790 | 18 |
| Example 12 | 8.5 | 60 | 0.964 | 8.5 | 50 | 0.967 | 1:1 | 790 | 18 |
| Example 13 | 8.5 | 60 | 0.964 | 11.5 | 30 | 0.967 | 1:1 | 790 | 18 |
| Comparative Example 1 | 8.5 | 60 | 0.964 | / | / | / | 10:0 | 775 | 18 |
| Comparative Example 2 | / | / | / | 10 | 40 | 0.967 | 0:10 | 775 | 18 |
| Comparative Example 3 | 6.5 | 85 | 0.966 | 8 | 70 | 0.967 | 7:3 | 772 | 16.5 |
| Comparative Example 4 | 7 | 65 | 0.964 | 8 | 70 | 0.967 | 1:1 | 775 | 18 |
| Comparative Example 5 | 6.5 | 85 | 0.964 | 8.5 | 50 | 0.967 | 1:1 | 790 | 18 |

**Table 2 Experiment results of Examples and Comparative Examples**

| | Lithium iron phosphate product | | | Battery performance | |
|---|---|---|---|---|---|
| | Dv50/µm | Dv99/µm | compaction density/g/cm³ | Capacity at 0.1 C/mAh/g | Capacity at 1 C/mAh/g |
| Example 1 | 1.246 | 8.207 | 2.6 | 156.7 | 136.3 |
| Example 2 | 1.239 | 8.222 | 2.56 | 156.6 | 136.6 |
| Example 3 | 1.473 | 8.124 | 2.53 | 157.1 | 136.8 |
| Example 4 | 1.221 | 7.096 | 2.45 | 156.8 | 136.5 |
| Example 5 | 1.112 | 8.585 | 2.45 | 159.8 | 142.3 |
| Example 6 | 1.345 | 6.673 | 2.53 | 156.7 | 135.6 |
| Example 7 | 1.498 | 7.626 | 2.53 | 157.52 | 137.5 |
| Example 8 | 1.137 | 6.1 | 2.53 | 156.6 | 135.9 |
| Example 9 | 1.419 | 8.762 | 2.53 | 157.4 | 136.8 |
| Example 10 | 1.479 | 7.032 | 2.58 | 156.5 | 135.5 |
| Example 11 | 1.368 | 5.919 | 2.61 | 157.8 | 137.8 |
| Example 12 | 1.248 | 8.331 | 2.6 | 156.4 | 135.3 |
| Example 13 | 1.253 | 6.028 | 2.6 | 157.6 | 135.9 |
| Comparative Example 1 | 1.544 | 6.49 | 2.45 | 152.6 | 128.4 |
| Comparative Example 2 | 0.754 | 12.718 | 2.31 | 160.6 | 148.6 |
| Comparative Example 3 | 1.068 | 8.193 | 2.43 | 155.3 | 132.3 |
| Comparative Example 4 | 1.161 | 10.332 | 2.45 | 152.9 | 130.8 |
| Comparative Example 5 | 1.178 | 6.574 | 2.45 | 154.6 | 135.4 |

### [Preparation of lithium-ion half cell]

Preparation of positive electrode plate: lithium iron phosphate powder, conductive carbon black (SP) and polyvinylidene fluoride (PVDF) as a positive electrode binder were dissolved in N-methylpyrrolidone (NMP) as a solvent according to a weight ratio of 90%:5%:5%, and uniformly mixed under sufficient stirring to obtain a positive electrode slurry, and the positive electrode slurry was coated onto a Al foil, and then subjected to oven drying, cold pressing and slitting to obtain a positive electrode plate.

Preparation of negative electrode plate: the negative electrode plate was a lithium plate.

Preparation of separator: a PE porous polymer film was used as the separator.

Electrolyte: EC/EMC/DMC was dissolved in 1M LiPF₆ at a volume ratio of 1:1:1 and stirred uniformly to obtain 1 mol/L of a LiPF₆ electrolyte.

The positive electrode plate, the negative electrode plate, the separator, and the electrolyte were assembled into a lithium-ion half cell.

### [Testing of grain size]

A diffraction pattern was obtained using a Bruker D8 DISCOVER X-ray diffractometer. The grain size information of the sample was obtained by deconvolving the full spectrum using a convolution method in JEDA software. As an example, diffraction patterns were obtained using a Bruker D8 DISCOVER X-ray diffractometer. During the data refinement process, peak shapes were calculated using the convolution method with TOPAS software, and full-spectrum fitting was performed using a basic instrument parameter method. The sample grain size information was obtained by deconvolution from the full spectrum.

### [Testing of iron-to-phosphorus ratio]

The Fe and P contents were determined by potassium dichromate titration and quinomolybdate gravimetric method, respectively. The iron-to-phosphorus ratio was then calculated using the formula Fe content × 0.5546 / P content. For specific procedures, please refer to the standard HG/T 4701-2021.

### [Testing of volume particle size distribution]

An appropriate amount of a sample to be tested (as long as the sample concentration ensured a shading degree of 8-12%) was taken, added with 20 ml of deionized water, and meanwhile subjected to outer ultrasound for 5 min (53 KHz/120 W) to ensure that the sample was completely dispersed, and then determined using a MasterSizer 3000 laser particle size analyzer according to GB/T19077-2016/ISO 13320:2009 standard .

### [Testing of compaction density]

A certain amount of powder was compacted onto a special mold with a known diameter (for example, the special mold could be Sunstest UTM7305). There was a metal plate on each of the top and bottom of the mold, and the powder was placed in the middle. By applying a pressure of 3 T and testing the corresponding powder thickness at the same time, the compaction density was calculated using the formula ρ = m/v. The specific operation could be conducted with reference to the standard: GB/T24533-2009.

### [Testing of 0.1 C rate performance]

Under the condition of a normal temperature (25°C), the battery was charged at a constant current of 0.1 C to 3.75 V, then charged at a constant voltage of 3.75 V until the current was 50 uA, and left to stand for 5 min; and then discharged at 0.1 C to 2.0 V for 2 cycles. 4 batteries were made at the same time, and the average of the results of the middle two groups was taken as the result.

### [Testing of 1 C rate performance]

Under the condition of a normal temperature (25°C), the battery was charged at a constant current of 0.1 C to 3.75 V, then charged at a constant voltage of 3.75 V until the current was 50 uA, and left to stand for 5 min; and then discharged at 0.1 C to 2.0 V. 4 batteries were made at the same time, and the average of the results of the middle two groups was taken as the result. The battery was then charged at a constant current of 1 C to 3.75 V, then charged at a constant voltage of 3.75 V until the current was 50 uA, and left to stand for 5 min; then discharged at 1 C. 4 batteries were made at the same time, and the average of the results of the middle two groups was taken as the result.

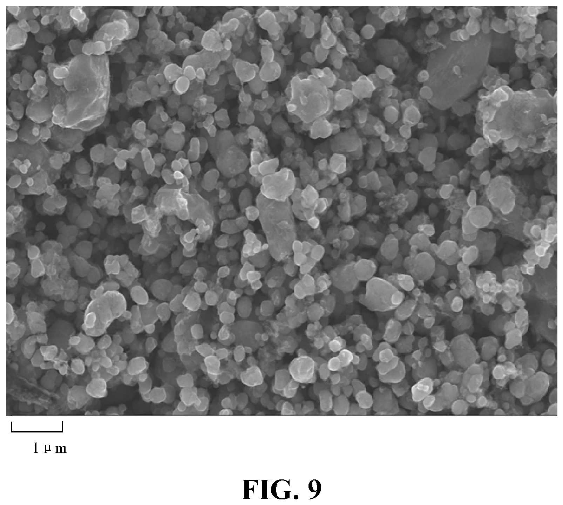

FIG. 8 was a graph of first charge and discharge at a rate of 0.1 C according to an embodiment of the present application; and FIG. 9 was an SEM picture of lithium iron phosphate according to an embodiment of the present application. Specifically, FIGs. 8 and 9 were schematic diagrams of the relevant tests of Example 1 of the present application. As shown in connection with FIG. 9, lithium iron phosphate had a relatively uniform particle size distribution.

As shown in connection with Examples 1-9 and Comparative Examples 1-5, in the method for preparing lithium iron phosphate according to an embodiment of the present application, lithium iron phosphate with high compaction density and high capacity could be prepared by cooperation of the first iron phosphate and the second iron phosphate with particular specific surface areas and grain sizes. The compaction density of the powder of lithium iron phosphate could reach or even exceed 2.45 g/cm³, the capacity of the battery at 0.1 C exceeded 156 mAh/g, and the capacity of the battery at 1 C exceeded 135 mAh/g.

As shown in connection with Examples 1-4, the temperature and time of the sintering treatment could be set according to the mass ratio of the first iron phosphate and the second iron phosphate, so as to facilitate obtaining of lithium iron phosphate with high compaction density and high capacity.

As shown in connection with Examples 1 and 5, reducing the temperature and time of the sintering treatment could yield lithium iron phosphate with a smaller particle size, resulting in a smaller increase in the compaction density of the lithium iron phosphate, but a larger increase in capacity of the lithium iron phosphate.

As shown in connection with Examples 6-7 and 10-13, setting the specific surface area of the first iron phosphate to 7 m²/g-9.5 m²/g and the grain size of the first iron phosphate to 50 nm-65 nm, and setting the specific surface area of the second iron phosphate to 8.5 m²/g-11.5 m²/g and the grain size of the second iron phosphate to 30 nm-50 nm, were beneficial for preparing lithium iron phosphate with high compaction density and high capacity.

As shown in connection with Examples 8-9, by setting the iron-to-phosphorus ratios of the first iron phosphate and the second iron phosphate in the range of 0.96-0.975, it was beneficial to prepare lithium iron phosphate with high compaction density and high capacity at a temperature of less than 800°C.

It should be noted that the present application is not limited to the aforementioned embodiments. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that can be conceived by those skilled in the art are applied to the embodiments, and other modes constructed by combining some of the constituent elements of the embodiments are also included within the scope of the present application.

## Claims

1. A method for preparing lithium iron phosphate, comprising:
adding a first iron phosphate, a second iron phosphate and a lithium source into a solvent, so as to obtain a slurry; and
performing sintering treatment on the slurry, so as to obtain lithium iron phosphate; wherein,
the specific surface area S1 of the first iron phosphate satisfies: 7 m²/g ≤ S1 ≤ 9.5 m²/g, and the grain size D1 of the first iron phosphate satisfies: 50 nm ≤ D1 ≤ 65 nm; and
the specific surface area S2 of the second iron phosphate satisfies: 8.5 m²/g ≤ S2 ≤ 11.5 m²/g, the grain size D2 of the second iron phosphate satisfies: 30 nm ≤ D2 ≤ 50 nm, the specific surface area of the second iron phosphate is greater than the specific surface area of the first iron phosphate, and the grain size of the second iron phosphate is smaller than the grain size of the first iron phosphate.

2. The preparation method according to claim 1, wherein the specific surface area S1 of the first iron phosphate satisfies: 8.5 m²/g ≤ S1 ≤ 9.5 m²/g, and/or the grain size D1 of the first iron phosphate satisfies: 50 nm ≤ D1 ≤ 60 nm.

3. The preparation method according to claim 1 or 2, wherein the specific surface area S2 of the second iron phosphate satisfies: 10 m²/g ≤ S2 ≤ 11.5 m²/g, and/or the grain size D2 of the second iron phosphate satisfies: 30 nm ≤ D2 ≤ 40 nm.

4. The preparation method according to any one of claims 1-3, wherein an iron-to-phosphorus ratio A1 of the first iron phosphate satisfies: 0.96 ≤ A1 ≤ 0.975; and/or an iron-to-phosphorus ratio A2 of the second iron phosphate satisfies: 0.96 ≤ A2 ≤ 0.975.

5. The preparation method according to any one of claims 1-4, wherein a mass ratio of the first iron phosphate to the second iron phosphate is 1:1 - 9:1.

6. The preparation method according to any one of claims 1-5, wherein a temperature T1 of the sintering treatment satisfies: T1 < 800°C.

7. The preparation method according to claim 6, wherein the temperature T1 of the sintering treatment satisfies: 750°C ≤ T1 ≤ 790°C.

8. The preparation method according to any one of claims 1-7, wherein a total temperature t of the sintering treatment satisfies: 14 h ≤ t ≤ 18 h.

9. The preparation method according to any one of claims 1-8, wherein the step of performing sintering treatment on the slurry comprises:
subjecting the slurry to grinding treatment and demagnetization treatment;
subjecting the demagnetized slurry to spray-drying treatment to obtain dried powder;
subjecting the dried powder to sintering treatment, so as to obtain the lithium iron phosphate.

10. The preparation method according to claim 9, wherein the step of subjecting the dried powder to sintering treatment comprises:
in an inert atmosphere, heating the dried powder to the temperature T1 of the sintering treatment within 5 h-6 h, and then holding the dried powder at the temperature T1 of the sintering treatment for 9 h-12 h to obtain the lithium iron phosphate.

11. The preparation method according to claim 9 or 10, further comprising:
after the dried powder is subjected to the sintering treatment, subjecting a sintered material to airflow pulverization treatment.

12. The preparation method according to any one of claims 1-11, wherein a molar ratio of an iron element content in the first iron phosphate and the second iron phosphate to a lithium element content in the lithium source is 1:1 - 1:1.05.

13. The preparation method according to any one of claims 1-12, wherein the step of adding a first iron phosphate, a second iron phosphate, and a lithium source into a solvent, so as to obtain a slurry comprises:
adding the first iron phosphate, the second iron phosphate the lithium source, and a carbon source into the solvent, so as to obtain the slurry.

14. The preparation method according to claim 13, wherein a ratio of a sum of the masses of the first iron phosphate and the second iron phosphate to the mass of the carbon source is 1:0.1 - 1:0.105.

15. The preparation method according to claim 13 or 14, wherein the carbon source comprises at least one of sucrose, glucose, dextrin, citric acid, fructose or starch.

16. A positive electrode active material, comprising lithium iron phosphate prepared by the preparation method according to any one of claims 1-15.

17. The positive electrode active material according to claim 16, wherein the compaction density of powder of the lithium iron phosphate under 3 T is greater than or equal to 2.45 g/cm³.

18. The positive electrode active material according to claim 17, wherein at a temperature of 25°C, the discharge capacity of the lithium iron phosphate at 0.1 C is greater than or equal to 156 mAh/g.

19. The positive electrode active material according to any one of claims 16-18, wherein a volume average particle size Dv50 of the lithium iron phosphate satisfies: 0.8 µm ≤ Dv50 ≤ 1.8 µm.

20. A positive electrode plate, comprising:
a positive electrode current collector and a positive electrode film layer disposed on at least one side of the positive electrode current collector,
wherein the positive electrode film layer comprises lithium iron phosphate prepared by the preparation method according to any one of claims 1-15 or the positive electrode active material according to any one of claims 16-19.

21. A battery comprising the positive electrode plate according to claim 20.

22. An electrical apparatus comprising the battery according to claim 21.
